# EUROPEAN PATENT APPLICATION

(11) **EP 4 230 361 A1**
(43) Date of publication of application: **23.08.2023**
(21) Application number: 21882840.8
(22) Date of filing: 19.10.2021
(51) Int. Cl.: B25J 9/22

(54) **SYSTEM CONTROL DEVICE, ROBOT CONTROL METHOD, TERMINAL DEVICE, TERMINAL CONTROL METHOD, AND ROBOT CONTROL SYSTEM**

(30) Priority: 19.10.2020 JP 2020175506
(71) Applicant: Kyocera Corporation, Kyoto-shi Kyoto 612-8501 (JP)
(72) Inventor: TATSUMI Kento, Kyoto-shi, Kyoto 612-8501 (JP)
(74) Representative: TBK
(86) International application number: PCT/JP2021/038669
(87) International publication number: WO 2022/085699

(57) **Abstract**

A system control device includes: a first interface connected communicatively to a terminal device; a second interface connected communicatively to at least one robot controller controlling at least one robot; and a control unit. The control unit acquires job information generated based on input information. The job information is used for identifying a library in accordance with work to be executed by the robot and is capable of compensating for an undefined portion. The control unit outputs a work command to the at least one robot controller based on the job information.

## Description

### CROSS-REFERENCE TO RELATED APPLICATIONS

The present application claims priority from Japanese Patent Application No. 2020-175506 (filed on October 19, 2020), the entire contents of which are hereby incorporated by reference.

### TECHNICAL FIELD

The present disclosure relates to system control devices, robot control methods, terminal devices, terminal control methods, and robot control systems.

### BACKGROUND OF INVENTION

A known method in the related art involves creating a program for defining the coordinates of a robot or specific input-output information thereof by teaching, and moving the robot by executing the program. For example, Patent Literature 1 describes a system control device that moves a robot by executing a program for driving and controlling various types of joint shafts and shafts.

### CITATION LIST

### PATENT LITERATURE

Patent Literature 1: Japanese Unexamined Patent Application Publication No. 5-4181

### SUMMARY

In an embodiment of the present disclosure, a system control device includes a first interface, a second interface, and a control unit. The first interface is connected communicatively to at least one terminal device configured to receive input information input by a user. The second interface is connected communicatively to at least one robot controller based on at least one library indicating robot movement and including an undefined portion. The at least one robot controller is configured to control at least one robot. The control unit is configured to acquire job information generated based on the input information. The job information is configured to identify the library in accordance with work to be executed by the at least one robot and is capable of compensating for the undefined portion. The control unit is configured to output a command for the work to the at least one robot controller based on the job information.

In an embodiment of the present disclosure, a robot control method includes communicating with at least one terminal device and at least one robot controller. The at least one terminal device is configured to receive input information input by a user. The at least one robot controller is configured to control at least one robot based on at least one library indicating robot movement and including an undefined portion. The robot control method includes acquiring, from the terminal device, job information generated based on the input information. The job information is configured to identify the library in accordance with work to be executed by the at least one robot and is capable of compensating for the undefined portion. The robot control method includes outputting a command for the work to the at least one robot controller based on the job information.

In an embodiment of the present disclosure, a terminal device includes a user interface, a communication interface, and a terminal control unit. The user interface is configured to receive input information input by a user. The communication interface is connected communicatively to a system control device configured to output information to at least one robot controller. The at least one robot controller is configured to control at least one robot based on at least one library indicating robot movement and including an undefined portion. The terminal control unit is configured to generate job information based on the input information. The job information is configured to identify the library in accordance with work to be executed by the at least one robot and is capable of compensating for the undefined portion. The communication interface is configured to output the job information to the system control device.

In an embodiment of the present disclosure, a terminal control method includes receiving input information input by a user. The terminal control method includes generating job information based on the input information and outputting the job information. The job information is configured to identify at least one library in accordance with work to be executed by at least one robot and includes compensation information configured to compensate for an undefined portion. The at least one robot is controlled by at least one robot controller based on the library indicating robot movement and including the undefined portion.

In an embodiment of the present disclosure, a robot control system includes at least one robot controller, a terminal device, and a system control device. The at least one robot controller is configured to control at least one robot based on at least one library indicating robot movement and including an undefined portion. The terminal device includes a user interface. The user interface is configured to receive input information input by a user. The system control device is connected communicatively to each of the robot controller and the terminal device. The terminal device is configured to generate job information based on the input information and output the job information to the system control device. The job information is configured to identify the library in accordance with work to be executed by the at least one robot and is capable of compensating for the undefined portion. The system control device is configured to output a command for the work to the at least one robot controller based on the job information acquired from the terminal device. The robot controller is configured to cause the robot to execute the work based on the command for the work.

### BRIEF DESCRIPTION OF THE DRAWINGS

FIG. 1 is a block diagram illustrating a configuration example of a robot control system according to an embodiment.
FIG. 2 is a block diagram illustrating another configuration example of the robot control system according to the embodiment.
FIG. 3 illustrates an example of a software configuration.
FIG. 4 is a sequence diagram illustrating a procedure example of a robot control method executed by the robot control system.
FIG. 5 is a flowchart illustrating a procedure example of a robot control method executed by a system control device.
FIG. 6 is a flowchart illustrating a procedure example of a terminal control method executed by a terminal device.
FIG. 7 is a flowchart illustrating a procedure example of a robot control method executed by a robot controller.

### DESCRIPTION OF EMBODIMENTS

Defining the coordinates or specific input-output information for moving a robot by teaching involves a significant number of steps and a significant amount of cost for the teaching. In other words, changing the content of work to be executed by the robot involves a significant number of steps and a significant amount of cost. It is demanded that the content of work to be executed by the robot be changed within a short period of time and at low cost.

The present disclosure provides a system control device, a robot control method, a terminal device, a terminal control method, and a robot control system that can change the content of work to be executed by a robot within a short period of time and at low cost.

### (Overview of Robot Control System 1)

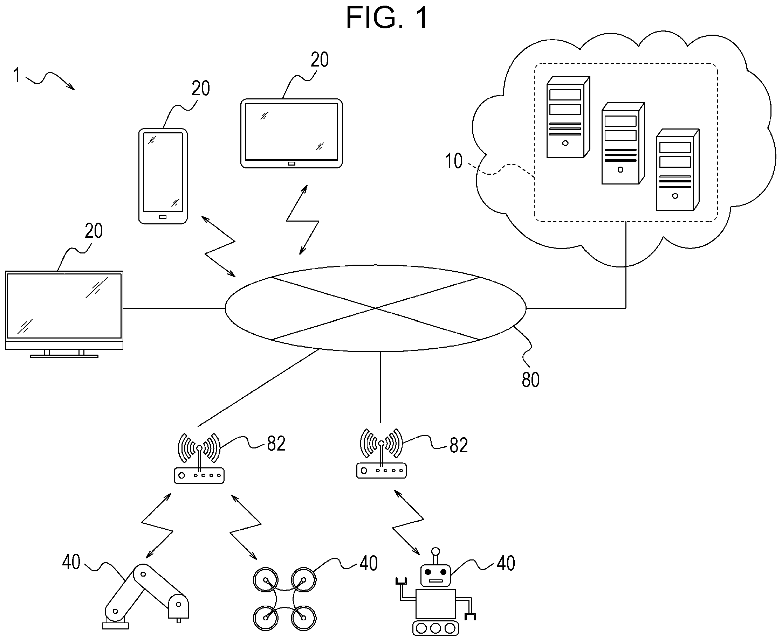

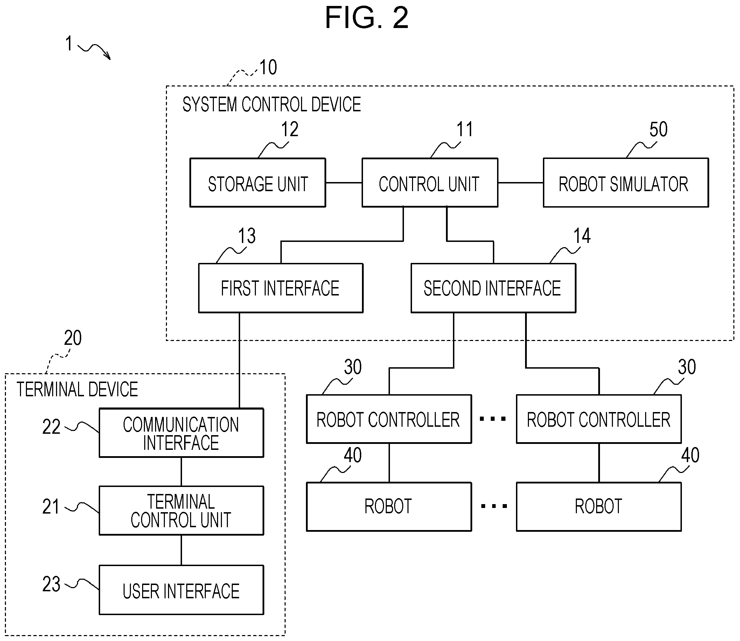

As illustrated in FIG. 1, a robot control system 1 according to an embodiment includes a system control device 10 and a terminal device 20. As will be described later, the robot control system 1 according to this embodiment further includes a robot controller 30 (see FIG. 2) that controls a robot 40. The system control device 10, the terminal device 20, and the robot 40 or the robot controller 30 are connected communicatively to one another via a network 80. As will be described later, the system control device 10, the terminal device 20, and the robot 40 or the robot controller 30 may be connected communicatively to one another without the intervention of the network 80. The network 80 and the robot 40 or the robot controller 30 may be connected communicatively to each other via an access point 82. The network 80 and the robot 40 or the robot controller 30 may be connected communicatively to each other without the intervention of the access point 82. The number of system control devices 10 and the number of the terminal devices 20 are each not limited to three, as illustrated, and may each be equal to or less than two, or may be equal to or greater than four.

The robot control system 1 receives, from a user via the terminal device 20, an input of information for identifying work to be executed by the robot 40. The robot control system 1 outputs command information about the work to be executed by the robot 40 from the system control device 10 to the robot controller 30. In the robot control system 1, the robot controller 30 causes the robot 40 to execute the work.

The robot control system 1 according to this embodiment is capable of causing the robot 40 to execute the work based on an abstract work command. For example, the user can configure data indicating the content of the work to be executed by the robot 40 in accordance with an abstract setting from a GUI (graphical user interface) and input a work execution command to the robot 40. In other words, the robot control system 1 according to this embodiment can define work and give a work command with abstract fineness, similarly to a work command given between humans for indicating which robot 40 is to execute what, when, where, and how.

A conceivable system according to a comparative example involves a user finely setting the movement of a robot by teaching so as to cause the robot to execute work. In the system according to the comparative example, for example, when the robot is caused to execute object transportation work, teaching is necessary for every type or state of an object to be transported.

In contrast, the robot control system 1 according to this embodiment may give a work command to the robot 40 with abstract fineness. Accordingly, even when the robot 40 is to execute non-routine work, the robot 40 can be caused to execute the non-routine work by simply reconfiguring the data indicating the content of the work. As a result, the work content is reconfigured within a short period of time and at low cost, so that the robot can be utilized for a more versatile purpose.

### (Configuration Example of Robot Control System 1)

As illustrated in FIG. 2, the robot control system 1 further includes the robot controller 30 that controls the robot 40. The system control device 10 is connected communicatively to each of the terminal device 20 and the robot controller 30. The system control device 10 may be connected communicatively to each of the terminal device 20 and the robot controller 30 via the network 80.

### [System Control Device 10]

The system control device 10 includes a control unit 11, a first interface 13, and a second interface 14. Although not essential, the system control device 10 further includes a robot simulator 50 (to be described later).

The system control device 10 is connected communicatively to the terminal device 20 via the first interface 13. The system control device 10 is connected communicatively to the robot controller 30 via the second interface 14. The system control device 10 may be connected communicatively to each of the terminal device 20 and the robot controller 30 in a wired or wireless manner. The robot controller 30 and the robot 40 may be connected communicatively to each other in a wired or wireless manner.

The components of the robot control system 1 may be connected communicatively to each other via a wireless base station or the access point 82 (see FIG. 1), or may be connected communicatively to each other without the intervention of a wireless base station or the access point 82. The access point 82 indicates a wireless device that connects terminals equipped with a wireless connection function to each other or to another network, and is normally a device that operates based on a communication protocol of a first layer (physical layer) and a second layer (data link layer) in an OSI (open system interconnect) reference model. The components of the robot control system 1 may be connected communicatively to each other via a dedicated line. The components of the robot control system 1 are not limited to these examples and may be connected communicatively to each other by using any of other various methods.

The control unit 11 may include at least one processor for implementing various functions of the system control device 10. The processor may execute a program that implements various functions of the system control device 10. The processor may be realized as a single integrated circuit. The integrated circuit is also referred to as an IC. The processor may be realized as a plurality of integrated circuits and discrete circuits connected communicatively to each other. The processor may include a CPU (central processing unit). The processor may include a DSP (digital signal processor) or a GPU (graphics processing unit). The processor may be realized based on any of other various known technologies.

The system control device 10 further includes a storage unit 12. The storage unit 12 may include a magnetic storage medium, such as a magnetic disk, or may include a memory, such as a semiconductor memory or a magnetic memory. The storage unit 12 may include a HDD (hard disk drive) or may include an SSD (solid state drive). The storage unit 12 stores various types of information, a program to be executed by the control unit 11, and/or the like. The storage unit 12 may function as a working memory of the control unit 11. The storage unit 12 may at least partially be included in the control unit 11.

The first interface 13 or the second interface 14 may include a communication device configured to be communicable in a wired or wireless manner. The communication device may be configured to be communicable using a communication method based on any of various communication standards. The first interface 13 or the second interface 14 can be configured in accordance with a known communication technology. A detailed description about, for example, the hardware of the first interface 13 or the second interface 14 will be omitted. The functions of the first interface 13 and the second interface 14 may be realized with a single interface, or may be realized individually with separate interfaces.

The system control device 10 may be connected communicatively to the network 80 by using the first interface 13 or the second interface 14. The system control device 10 may be connected communicatively to each of the terminal device 20 and the robot controller 30 via the network 80.

In the robot control system 1, the system control device 10 may be a server device. The server device may include at least one information processing device. The server device may be configured to cause a plurality of information processing devices to execute parallel processing. The server device does not need to include a physical housing, and may be configured based on a virtual technology, such as a virtual machine or a container orchestration system. The server device may be configured using a cloud service. If configured using a cloud service, the server device may be configured by combining managed services. The function of the system control device 10 may be implemented as a cloud service.

The server device may include at least one server group and at least one database group. The server group functions as the control unit 11. The database group functions as the storage unit 12. The number of server groups may be one or may be equal to or greater than two. If the number of server groups is one, a function implemented by the one server group encompasses functions implemented by the server groups. The server groups are connected communicatively to each other in a wired or wireless manner. The number of database groups may be one or may be equal to or greater than two. The number of database groups may be appropriately adjusted based on the volume of data managed by the server device and the availability requirement demanded in the server device. The database group is connected communicatively to each server group in a wired or wireless manner.

Although the system control device 10 is illustrated as a single device in FIG. 1 and FIG. 2, a plurality of components may be regarded and operated as a single system, where necessary. In other words, the system control device 10 is configured as a variable-volume platform. As a result of the use of the plurality of components as the system control device 10, if one of the components become inoperable in an unexpected event, such as a natural hazard, the operation of the system proceeds continuously by using another component. In this case, the plurality of components is connected to each other by a wired or wireless line so as to be communicable with each other. The plurality of components may be established astride a cloud service and an on-premises environment.

The system control device 10 is connected to each of the terminal device 20, the robot controller 30, and the robot 40 controlled by the robot controller 30 by a wired or wireless line. The system control device 10, the terminal device 20, and the robot controller 30 each include an interface that uses a standard protocol, and are communicable with one another bi-directionally.

### [Terminal Device 20]

The terminal device 20 includes a terminal control unit 21, a communication interface 22, and a user interface 23.

The terminal control unit 21 may include at least one processor. The terminal control unit 21 may be identical to or similar to the control unit 11 of the system control device 10. The terminal control unit 21 may execute an application that provides a GUI (graphical user interface) corresponding to the user interface 23 to be described later. The terminal control unit 21 may provide the GUI by executing a GUI program distributed from another device, such as the system control device 10, on a web browser. If the GUI is to be provided on a web browser, the terminal control unit 21 may be configured to receive the GUI program from another device, such as the system control device 10, based on a request input to the web browser by the user, and perform rendering on the web browser.

The terminal device 20 may be established astride a cloud service and an on-premises environment. In other words, for example, the user interface 23 may be established in the on-premises environment, and the terminal control unit 21 may be established as the cloud service.

The communication interface 22 may be identical to or similar to the first interface 13 or the second interface 14 of the system control device 10.

The user interface 23 provides the aforementioned GUI to the user. The user interface 23 includes an output device that outputs information to the user and an input device that receives an input from the user.

The output device may include a display device. The display device may include a liquid crystal display (LCD), an organic EL (electro-luminescence) display, or an inorganic

EL display, or may include a plasma display panel (PDP). The display device is not limited to these displays, and may include any of other various types of devices. The display device may include a light emitting device, such as an LED (light emitting diode). The display device may include any of other various types of devices. The output device may include an audio output device, such as a loudspeaker, outputting audio information, such as a voice. The output device is not limited to these examples, and may include any of other various types of devices.

For example, the input device may include a touchscreen or a touch sensor, or may include a pointing device, such as a mouse. The input device may include a physical key. The input device may include an audio input device, such as a microphone. The input device is not limited to these examples, and may include any of other various types of devices.

The terminal device 20 may include at least one information processing device. The number of terminal devices 20 included in the robot control system 1 is not limited to one, and may be equal to or greater than two. If the robot control system 1 includes a plurality of terminal devices 20, each terminal device 20 may receive an input from the user. The terminal device 20 may be a tablet terminal. The terminal device 20 may be a portable telephone terminal, such as a feature phone or a smartphone. The terminal device 20 may be a PC (personal computer) terminal, such as a desktop PC or a notebook PC. The terminal device 20 is not limited to these examples, and may be any of various types of devices capable of providing a GUI and a communication function.

The terminal device 20 is used by the user for giving a work command to the robot controller 30 and the robot 40 via the system control device 10.

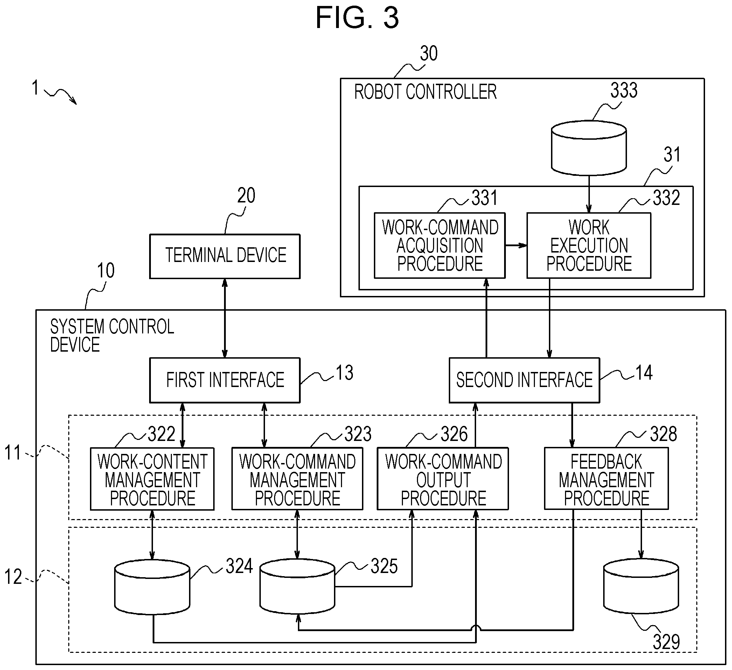

The terminal device 20 may be used for adding or deleting software to or from a library group 333 (see FIG. 3), which defines the movement of the robot 40, via, for example, a browser or a dedicated application, or may be used for giving a command for changing the settings of the robot control system 1. The terminal device 20 may be used for monitoring the state of the robot 40. The terminal device 20 is not limited to these examples, and can provide other various functions.

### [Robot Controller 30]

The robot controller 30 includes a robot control unit 31. The robot control unit 31 may include at least one processor. The robot control unit 31 may be identical to or similar to the control unit 11 of the system control device 10.

The robot controller 30 is capable of acquiring, from the system control device 10, job information and task information for identifying work to be executed by the robot 40. The robot controller 30 outputs information for identifying the movement of the robot 40 based on the job information and the task information. The work to be executed by the robot 40 may include, for example, work involving moving a target work object between two locations.

The robot controller 30 may include an interface that acquires the job information and the task information from the system control device 10. The robot controller 30 may also include an interface that performs signal processing with the robot 40. These interfaces of the robot controller 30 may be identical to or similar to the first interface 13 or the second interface 14 of the system control device 10. The robot controller 30 may include a processor that generates information for identifying the movement of the robot 40 based on the job information and the task information. The processor of the robot controller 30 may be identical to or similar to the processor included in the control unit 11 of the system control device 10.

In the configuration illustrated in FIG. 2, a single robot controller 30 is connected to a single robot 40. The single robot controller 30 may be connected to two or more robots 40. The single robot controller 30 may control a single robot 40 alone, or may control two or more robots 40. The number of robot controllers 30 and the number of robots 40 are each not limited to two, and may each be one or may be equal to or greater than three.

The robot controller 30 may be established astride a cloud service and an on-premises environment. In other words, for example, the interface for the robot 40 may be established in the on-premises environment, and the robot control unit 31 may be established as the cloud service.

### [Robot 40]

The robot 40 may be a robot arm equipped with an arm. The arm may be, for example, a six-axis or seven-axis vertical articulated robot. The arm may be a three-axis or four-axis horizontal articulated robot or SCARA robot. The arm may be a two-axis or three-axis orthogonal robot. The arm may be a parallel link robot or the like. The number of axes included in the arm is not limited to the illustrated number.

The robot 40 may include an end effector attached to the arm. The end effector may include, for example, a gripping hand capable of gripping the target work object. The gripping hand may have a plurality of fingers. The number of fingers of the gripping hand may be equal to or greater than two. The gripping hand may have at least one j oint. The end effector may include a suction hand capable of suctioning the target work object. The end effector may include a scooping hand capable of scooping the target work object. The end effector may include a tool, such as a drill, so as to be capable of performing various types of machining, such as a hole-drilling process, on the target work object. The end effector is not limited to these examples, and may be capable of performing any of other various types of operations.

The robot 40 can control the position of the end effector by moving the arm. The end effector may have a shaft serving as reference for a direction in which the end effector acts against the target work object. If the end effector has a shaft, the robot 40 can control the direction of the shaft of the end effector by moving the arm. The robot 40 controls the start and the end of the movement of the end effector against the target work object. The robot 40 controls the movement of the end effector while controlling the position of the end effector or the direction of the shaft of the end effector, thereby moving and machining the target work obj ect.

The robot 40 may be an automated guided vehicle (AGV). The robot 40 may be a drone. The robot 40 is not limited to a robot arm or an AGV, and may be of any of other various types, such as a vehicle, an electronic device, or a control machine.

The robot 40 may further include a sensor that detects the state of each component of the robot 40. The sensor may detect the actual position or orientation of each component of the robot 40, or may detect information related to the speed or acceleration of each component of the robot 40. The sensor may detect a force acting on each component of the robot 40. The sensor may detect an electric current flowing through a motor that drives each component of the robot 40, or may detect a torque of the motor. The sensor can detect information obtained as an actual operation result of the robot 40. The robot controller 30 can ascertain the actual operation result of the robot 40 by acquiring a detection result of the sensor.

### (Operation Example of Robot Control System 1)

As mentioned above, in the robot control system 1, the terminal device 20 receives an input from the user, generates information for identifying work to be executed by the robot 40 based on the input from the user, and outputs the information to the system control device 10. The information for identifying the work to be executed by the robot 40 based on the input from the user is divided into job information and task information.

The job information is used for identifying the content of the work to be executed by the robot 40. The job information corresponds to a document that is to be used when a work command is given between humans and that has a set target work object or a set work procedure. In other words, the job information corresponds to a content described in a so-called work instruction document.

The task information is used for identifying the robot 40 that is to execute the work identified from the job information and also for identifying a start condition and an end condition for the work identified from the job information. The task information corresponds to information about a command given between humans for indicating the start or the end of the work.

The system control device 10 outputs the job information and the task information to the robot controller 30. Based on the job information and the task information, the robot controller 30 invokes an action library that defines the movement of the robot 40, and causes the robot 40 to execute the work. The robot controller 30 acquires a result of the work executed by the robot 40 as feedback information, and outputs the feedback information to the system control device 10. The feedback information is also referred to as FB information.

The action library may be a program module installed in the robot controller 30. The action library is included in the library group 333. The robot controller 30 installs at least one action library. The library group 333 includes the action library installed by the robot controller 30.

The robot controller 30 transfers, to the library group 333, information for identifying the action library to be invoked from installed action libraries included in the library group 333, so as to be capable of invoking the action library. The information for identifying the action library to be invoked is also referred to as an identifier. In other words, when the robot controller 30 is to invoke the action library from the library group 333, the action library to be invoked is identified in accordance with the identifier.

The action library defines a sequential processing procedure for controlling the movement of the robot 40. The action library includes an undefined portion in the processing procedure. The robot controller 30 can complete the processing procedure by compensating for the undefined portion included in the processing procedure. When invoking the action library, the robot controller 30 can complete the processing procedure of the action library by transferring, to the action library, a parameter for identifying information that compensates for the undefined portion of the action library. The information that compensates for the undefined portion of the action library is also referred to as compensation information. The job information may be capable of serving as compensation by including the compensation information.

The compensation information includes first compensation information. The first compensation information may be, for example, information related to a work environment where work is performed. Alternatively, the first compensation information may be information related to a target work object.

The first compensation information may be identified as, for example, a physical quantity by which each component of the robot 40 is to be controlled. The physical quantity by which each component of the robot 40 is to be controlled may include, for example, a movement amount of the arm or the like, or a torque to be output from the motor that drives the arm or the like. The first compensation information may include information for identifying a spot that is to receive the force of the robot 40, such as a part of the target work object to be gripped by the robot 40, when, for example, the robot 40 is to grip the target work obj ect.

The first compensation information is not limited to these examples, and may include any of other various types of information. The first compensation information may be expressed using a text string, a numerical value, a truth value, or the like. If the robot 40 is capable of performing work without using the first compensation information as compensation, the first compensation information may be a null value.

The compensation information may also include second compensation information. The second compensation information is used for compensating for another movement if such another movement not defined in the action library is necessary for accomplishing the processing of the action library.

The second compensation information may be identified as, for example, an identifier for identifying an auxiliary library that defines the movement of the robot 40 in an auxiliary fashion. The auxiliary library may define an algorithm of, for example, a procedure, a condition, or the like based on which the robot 40 recognizes the target work object. If an execution argument includes the identifier for identifying the auxiliary library, the robot controller 30 acquires information about a result obtained when the robot 40 is caused to execute the movement or the process defined in the auxiliary library identified based on the identifier. The robot controller 30 may control the movement of the robot 40 based on the processing procedure of the action library completed by compensating for the undefined portion of the action library with the execution result of the auxiliary library.

The second compensation information is not limited to these examples, and may include any of other various types of information. The second compensation information may be expressed using a text string, a numerical value, a truth value, or the like. If the robot 40 is capable of performing work without using the second compensation information as compensation, the second compensation information may be a null value.

The compensation information may be acquired from the robot controller 30 in response to an input to the terminal device 20 from the user. The robot controller 30 may cause the robot 40 to acquire the compensation information. In other words, for example, when the user performs an input, compensation information of the target work object, the work environment, or the like may be acquired through equipment (e.g., a camera) that the robot 40 is provided with. When the user performs an input, compensation information of the identifier for the auxiliary library to be executed or the like may be acquired in accordance with information about the robot 40 itself, information about equipment that the robot 40 is provided with, or the like.

When the compensation information is to be acquired, the compensation information may include both the first compensation information and the second compensation information, or may include either the first compensation information or the second compensation information. The first compensation information and the second compensation information may each be a null value.

The job information includes an identifier and an execution argument. For example, the identifier serves as ID (identification) for identifying the action library. The execution argument of the job information is to be transferred to another program when work is executed. The execution argument may include compensation information that compensates for the aforementioned undefined portion of the library.

The job information may include a plurality of identifiers. If the job information includes a plurality of identifiers, the robot controller 30 invokes the action library identified based on each identifier and causes the robot 40 to execute work. The job information may include information for identifying an action library to be invoked first from a plurality of action libraries by the robot controller 30. The information for identifying the action library to be invoked first from the plurality of action libraries is also referred to as an entry point. In other words, the entry point may be defined in the job information. The entry point may be expressed as a numerical value.

The job information may include information for identifying an action library to be invoked next by the robot controller 30 on the basis of an operation result of the robot 40 controlled based on the action library first invoked by the robot controller 30. In other words, the job information may include information for setting the action library to be invoked next by the robot controller 30 based on a result of work first executed by the robot 40. The job information may include information for setting an action library to be invoked next by the robot controller 30 for executing subsequent work occurring based on a result of work executed previously by the robot 40. The work executed previously by the robot 40 may include not only the last executed work but also work executed second or earlier from the last.

The job information may be regarded as including information for defining a subsequent process by the robot controller 30. The subsequent process may be defined based on context information output when the robot controller 30 controls the movement of the robot 40. The context information corresponds to a series of information output to a storage unit or the like when a program of the action library invoked by the robot controller 30 is to be executed. The context information may include, for example, data used for determining the movement of the robot 40 or information indicating whether work (process) executed by the robot 40 is successful or unsuccessful. The context information is not limited to these types of information, and may include any of other various types of information. The context information may be appropriately set based on implementation of the action library.

In other words, the job information may include information for defining a branch condition based on the operation result of the robot 40.

The task information includes information for identifying a start condition and an end condition for work identified from the job information. The task information may further include the job information and information for identifying the robot 40 that is to execute the work identified from the job information. The robot 40 that is to execute the work is also referred to as a designated object. If the robot controller 30 causes a plurality of robots 40 to execute work, information indicating the progress of work by each robot 40 may be defined as information related to the task information. Information for requesting a pause in the work of the robot 40 or information for canceling the work by the robot 40 may be defined as the information related to the task information.

The task information may also include information for defining a subsequent process by the robot controller 30. In other words, the robot controller 30 may define a branch condition based on the operation result of the robot 40 and output job information for identifying work to be executed next based on the condition.

The library group 333 includes an action library and an auxiliary library. The action library includes a program for defining a series of movement (the flow of a process) of the robot 40. The program of the action library includes an undefined portion in which the movement of the robot 40 is not defined. The action library includes information for defining the format of information receivable as information that compensates for the undefined portion. In other words, the action library includes information for defining the format of an execution argument to be transferred from the robot controller 30 when the action library is invoked from the robot controller 30. The information for defining the format of the execution argument is also referred to as argument definition information. The robot controller 30 can compensate for the undefined portion of the invoked action library with compensation information identified based on the execution argument configured according to the format defined in the argument definition information. For example, if the identifier for the auxiliary library serving as the execution argument is defined as a receivable format in accordance with the argument definition information, the robot controller 30 transfers the identifier for the auxiliary library as an execution argument and invokes the action library.

The auxiliary library includes a program to be invoked when the action library is executed. If the identifier for the auxiliary library is transferred as an execution argument to the action library, the robot controller 30 invokes the auxiliary library identified based on the identifier and executes the program of the auxiliary library while the program of the action library is being executed. The auxiliary library may include, for example, a program implementing an AI (artificial intelligence) inference algorithm used by the robot 40 for recognizing the target work object. The auxiliary library is not limited to this example, and may include any of other various programs.

For example, the action library or the auxiliary library is created by programming in accordance with an input by the user or a third party other than the user, by AI machine learning, or the like. If the robot 40 is to be used during the creation of the action library or the auxiliary library, the created action library or the like may be used in a robot 40 different from the robot 40 used during the creation.

The library group 333 may be managed in accordance with meta-information. The meta-information may include the identifier for the action library or the auxiliary library. The meta-information may include accessory information, such as a display name of the action library or the auxiliary library.

The robot control system 1 according to this embodiment is capable of causing the robot 40 to execute work based on an abstract work command. For example, the user can configure data indicating the content of the work to be executed by the robot 40 in accordance with an abstract setting from a GUI (graphical user interface) and input a work execution command to the robot 40. In other words, the robot control system 1 according to this embodiment can define work and give a work command with abstract fineness, similarly to a work command given between humans for indicating which robot 40 is to execute what, when, where, and how.

### [Software Configuration]

A process executed in the robot control system 1 according to this embodiment based on a process procedure group schematically illustrated in FIG. 3 will now be described. The arrows connecting the components in FIG. 3 each indicate a direction in which data is output.

### [Process of System Control Device 10]

Software to be executed by the control unit 11 of the system control device 10 includes a work-content management procedure 322, a work-command management procedure 323, a work-command output procedure 326, and a feedback management procedure 328. The software to be executed by the control unit 11 is also referred to as an internal module. When the control unit 11 is to execute the software, the control unit 11 refers to databases 324, 325, and 329 to register data and to acquire data. It is assumed that the databases 324, 325, and 329 are stored in the storage unit 12. The control unit 11 performs registration, replacement, and/or deletion of job information in the database 324. The control unit 11 performs registration, replacement, and/or deletion of task information in the database 325. The control unit 11 performs registration, replacement, and/or deletion of feedback information in the database 329.

The control unit 11 executes the work-content management procedure 322 so as to register the job information in the database 324 based on a request input to an application executed by the terminal device 20 or a browser. In detail, the control unit 11 executes the work-content management procedure 322 so as to acquire the job information from the terminal device 20 and register the job information in the database 324. The control unit 11 executes the work-content management procedure 322 so as to acquire the job information from the database 324 and output the job information to a request source based on an acquisition request of the job information.

The control unit 11 executes the work-command management procedure 323 so as to register the task information in the database 325 based on a request input to the application executed by the terminal device 20 or the browser. In detail, the control unit 11 executes the work-command management procedure 323 so as to acquire the task information from the terminal device 20 and register the task information in the database 325. The control unit 11 executes the work-command management procedure 323 so as to acquire the task information from the database 325 and output the task information to a request source based on an acquisition request of the task information.

The control unit 11 may generate the job information or the task information based on a request from the terminal device 20 and register the job information or the task information in the database 324 or 325.

The control unit 11 may execute the work-command management procedure 323 so as to cancel the task information output to the robot controller 30 and/or pause the movement of the robot 40 based on the task information on the basis of a request from the terminal device 20.

The control unit 11 executes the work-command output procedure 326 so as to output the task information registered in the database 325 to the robot controller 30 and command the robot 40 to execute work. The robot controller 30 causes the robot 40 to start the work based on the start condition identified from the task information and to end the work based on the end condition.

The control unit 11 may set the timing for outputting the task information to the robot controller 30. In detail, the control unit 11 may output the task information to the robot controller 30 at a timing identified from the task information based on the work start condition. For example, if the work start condition indicates that the work is to be started immediately, the control unit 11 executes the work-command output procedure 326 so as to output the task information immediately to the robot controller 30 upon acquisition of the task information from the terminal device 20. For example, if the work start condition designates a start time, the control unit 11 may execute the work-command output procedure 326 so as to output the task information to the robot controller 30 at the designated start time. The work start condition is not limited to this example, and may be set in any of other various forms, such as a condition based on the state of the target work object.

The control unit 11 may output a command for ending the work of the robot 40 as the task information to the robot controller 30 at a timing based on the work end condition, such that the robot 40 ends the work based on the end condition identified from the task information. For example, if the work end condition designates the number of times the work identified from the job information is to be executed, the control unit 11 may execute the work-command output procedure 326 so as to output a command, to the robot controller 30, for ending the work of the robot 40 after the work is executed for the designated number of times. For example, if the work end condition designates an end time, the control unit 11 may execute the work-command output procedure 326 so as to output a command for ending the work of the robot 40 to the robot controller 30 at the designated end time. In other words, the robot controller 30 does not set the end time for the work of the robot 40 based on an internal time of the robot controller 30. Accordingly, the control unit 11 can control the end time for the work of the robot 40 regardless of the reliability of the internal time of the robot controller 30. The work end condition is not limited to these examples, and may be set in any of other various forms, such as a condition based on the state of the target work object.

If the control unit 11 acquires a request for canceling the task information from the terminal device 20, the control unit 11 may output a command for canceling the work of the robot 40 as the task information to the robot controller 30. If the control unit 11 acquires a request for pausing the work of the robot 40 from the terminal device 20, the control unit 11 may output a command for pausing the work of the robot 40 as the task information to the robot controller 30.

The control unit 11 may output the command for ending the work of the robot 40, the cancellation command, the pause command, or the like as information separate from the task information to the robot controller 30.

### [Process of Robot Controller 30]

Software to be executed by the robot control unit 31 of the robot controller 30 includes a work-command acquisition procedure 331 and a work execution procedure 332. The robot controller 30 refers to the library group 333 including the preinstalled action library and executes the work execution procedure 332.

The robot controller 30 executes the work-command acquisition procedure 331 so as to acquire the job information and the task information as a work command from the work-command output procedure 326 executed by the system control device 10. The robot controller 30 executes the work-command acquisition procedure 331 so as to analyze the acquired work command.

The robot controller 30 executes the work execution procedure 332 so as to control the movement of the robot 40 based on a work-command analysis result obtained from the work-command acquisition procedure 331. If it is analyzed in the work-command acquisition procedure 331 that a command for starting work of the robot 40 is acquired as the task information, the robot controller 30 may execute the work execution procedure 332 so as to perform control for causing the robot 40 to start the work. The robot controller 30 may execute the work execution procedure 332 so as to queue the command for starting work of the robot 40 (i.e., store the command in a queue) and cause the robot 40 to execute the work by retrieving the queued command one by one. If the robot 40 is not capable of executing two or more operations at the same time, the robot controller 30 may control the order in which the robot 40 executes the operations by queuing. For example, if a command for starting work of the robot 40 is acquired while the robot 40 is executing work, the robot controller 30 may cause the robot 40 to execute the work based on the acquired command upon completion of the work previously executed by the robot 40.

If it is analyzed in the work-command acquisition procedure 331 that a command for canceling the task information is acquired, the robot controller 30 may execute the work execution procedure 332 so as to cancel the work of the robot 40. If it is analyzed in the work-command acquisition procedure 331 that a command for pausing the work of the robot 40 is acquired, the robot controller 30 may execute the work execution procedure 332 so as to perform control for causing the robot 40 to pause the work. If a work cancellation or pause command is queued and the work has not started, the robot controller 30 may delete the queued command. The robot controller 30 may acquire the command for pausing the work of the robot 40 as the task information.

The robot controller 30 may execute the work execution procedure 332 so as to extract the command for starting work of the robot 40 from the queue. The robot controller 30 executes the work execution procedure 332 so as to analyze the job information and the task information included in the command, and controls hardware of the robot 40 to cause the robot 40 to execute the work. The robot controller 30 executes the work execution procedure 332 so as to set an execution procedure of the work content identified from the job information based on the end condition identified from the task information. For example, if the end condition designates the number of times the work is to be executed, the robot controller 30 executes the work execution procedure 332 so as to control the hardware of the robot 40 such that the work content identified from the job is executed repeatedly for the designated number of times.

The robot controller 30 invokes and executes a program included in the library group 333 in the work execution procedure 332 so as to cause the robot 40 to execute the work. The library group 333 includes an action library. The robot controller 30 invokes and executes the action library identified based on the identifier included in the job information in the work execution procedure 332, so as to cause the robot 40 to execute the work. The library group 333 may further include an auxiliary library. If the identifier for the auxiliary library is to be transferred as an execution argument when the action library is to be invoked, the robot controller 30 further invokes and executes the auxiliary library when executing the action library.

The robot controller 30 executes the work execution procedure 332 so as to output information related to the status of the work of the robot 40 to the system control device 10. The information related to the status of the work of the robot 40 is also referred to as feedback (FB) information. The FB information may include information for identifying the work executed by the robot 40. The FB information may include information indicating whether the robot 40 has started or ended the work or information indicating the progress of the work of the robot 40. The control unit 11 of the system control device 10 acquires the FB information via the second interface 14. The control unit 11 executes the feedback management procedure 328 so as to register the FB information in the database 329 and also to register, in the database 325, information for updating the execution status of the work identified from the task information registered in the database 325.

The robot control system 1 according to this embodiment may be a cloud robotic system. For example, while including at least a part of the configuration illustrated in FIG. 3 as a basic configuration, the robot control system 1 may include a configuration communicable with an external system as another configuration. The robot control system 1 may be configured to receive a request from the external system and/or to output a request to the external system.

The system control device 10 may be made redundant by including a plurality of server devices. By being made redundant, the system control device 10 may be configured in accordance with various requests. In this case, the server devices are communicable with each other.

### [Description of Operation Example Based on Sequence Diagram]

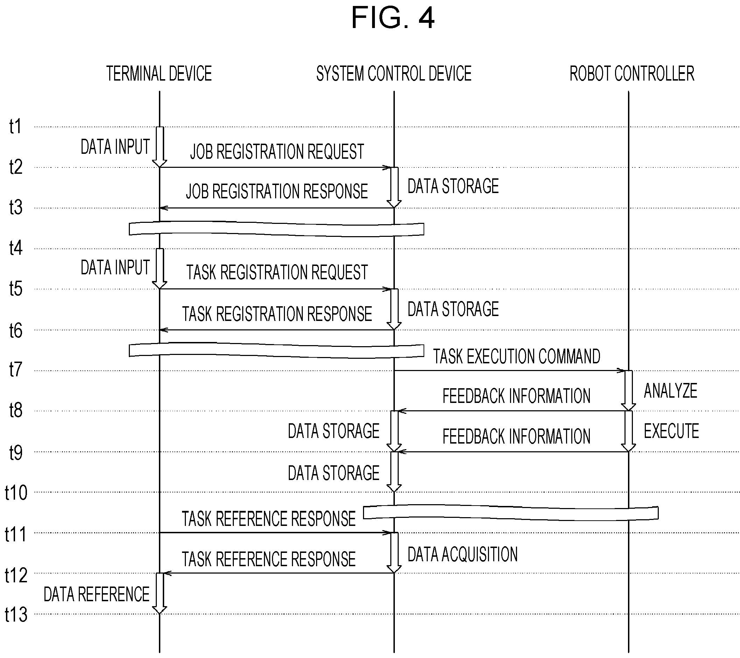

An operation example of the robot control system 1 according to this embodiment will now be described based on a sequence diagram illustrated in FIG. 4. The sequence diagram illustrated in FIG. 4 indicates the movement of each component of the robot control system 1 at each of indicated time points t1 to t13. In this example, the robot 40 is an arm robot and is equipped with a camera. It is assumed that the robot 40 is requested from the user to execute a pick-and-place operation using an AI-based object recognition inference. It is assumed that the robot controller 30 has preinstalled therein an action library for executing the pick-and-place operation and an auxiliary library for executing the AI-based object recognition inference.

In a period from the time point 11 to the time point t2, the terminal device 20 receives, from the user, an input of job data serving as definition information indicating the content of robot work. The terminal device 20 may allow the user to input the job data by using an application installed in the terminal device 20 or a GUI of an application distributed from an external device, such as the system control device 10, on a web browser. In this example, the terminal device 20 receives an input for designating an action library that causes the robot 40 to execute the pick-and-place operation.

Where necessary, the terminal device 20 receives an input for designating an execution argument to be transferred when the terminal device 20 invokes the action library. As mentioned above, the method of how an execution argument is designated is defined for each action library. In this example, it is assumed that the execution argument to be transferred when the action library for the pick-and-place operation is invoked is defined as information related to a target work object.

When the terminal device 20 receives an input for designating the action library for the pick-and-place operation, the terminal device 20 further receives an input related to a target work object (first compensation information). In this example, for example, the terminal device 20 may receive an input for designating a screw as a target object for the pick-and-place operation. Accordingly, the first compensation information corresponding to the screw is added to the job information, so that, for example, the robot 40 can be caused to move in a manner suitable for the pick-and-place operation of the screw based on a code related to the screw in the action library.

As another example, it is assumed that, when the terminal device 20 receives an input for designating the action library for the pick-and-place operation, the terminal device 20 further receives an input related to a method for recognizing a work location. In this example, it is assumed that the terminal device 20 receives an input for designating the AI-based object recognition inference as the method for recognizing a work location. In this case, the terminal device 20 may recognize that an identifier (second compensation information) for the auxiliary library performing the AI-based object recognition inference has been input as an execution argument. The terminal device 20 may receive an input for designating the auxiliary library. The terminal device 20 may receive an input related to a condition for selecting a container that is to pick the target work object and a container that is to place the target work object from candidates of containers recognized by the camera that the robot 40 is equipped with. For example, the terminal device 20 may allow the user to select the colors of the containers as the features of the containers. For example, the terminal device 20 may receive an input of a condition indicating that the container that is to pick the target work object is red and the container that is to place the target work object is blue.

In other words, for example, the terminal device 20 receives an input for designating the action library so as to be capable of acquiring information for identifying how the robot 40 is to be moved. The terminal device 20 receives an input related to the target work object so as to be capable of acquiring information for identifying what is serve as the target work object for the robot 40. The terminal device 20 receives an input for designating the auxiliary library as the method for recognizing a work location so as to be capable of acquiring information for identifying where the robot 40 is to be moved. In detail, the terminal device 20 can receive, from the user, a request for causing the robot 40 to execute work involving "picking and placing" a "screw" from a "red" container to a "blue" container. This work content will be referred to as a pick-and-place job hereinafter. Although the first compensation information received indicates that the target object is a screw in the above example, for example, the second compensation information designating the auxiliary library capable of recognizing a screw as the target object may be received.

At the time point t2, the terminal device 20 generates job information for identifying the pick-and-place job based on an input from the user via the GUI, and outputs, to the system control device 10, the job information together with a registration request for the job information.

In a period from the time point t2 to the time point t3, the system control device 10 confirms the content of the job information acquired together with the registration request. If there is no problem, such as inconsistency, in the content of the job information, the system control device 10 stores the job information in the database. In other words, the system control device 10 registers and perpetuates the job information in the database. Perpetuation of information means that the information is continuously stored until a command for deleting the information is received or that the information is continuously stored for a predetermined time period. By storing the job information in the database, the system control device 10 can invoke the job information any number of times within the period in which the job information is stored as valid information.

At the time point t3, the system control device 10 outputs a registration response including a report indicating that the registration of the job information is completed. The terminal device 20 acquires the registration response so as to confirm that the job information is registered.

In a period from the time point t4 to the time point t5 included in a time series not necessarily continuing from the period from the time point t1 to the time point t3, the terminal device 20 receives an input of task data serving as information for commanding the robot 40 to execute work identified from the job information. The terminal device 20 may allow the user to input the task data by using an application installed in the terminal device 20 or a GUI of an application distributed from an external device, such as the system control device 10, on a web browser. In this example, it is assumed that the terminal device 20 receives an input for designating a robot 40 that is to execute the pick-and-place job as "X", designating the start condition as "immediately", designating the end condition as "until executed for designated number of times", and designating the designated number of times as "five". In other words, the terminal device 20 receives information about "who"-related designation in accordance with an input for selecting a robot 40 and information about "when"-related designation in accordance with an input for designating the start condition or the end condition. In detail, the terminal device 20 receives task data indicating that the robot 40 serving as "X" is to execute a pick-and-place job "immediately" "five" times. The task data indicating that the robot 40 serving as "X" is to execute the pick-and-place job "immediately" "five" times corresponds to a work command. This work command will be referred to as a pick-and-place task hereinafter.

At the time point t5, the terminal device 20 generates task information for identifying the pick-and-place task based on an input from the user via the GUI, and outputs, to the system control device 10, the task information together with a registration request for the task information.

In a period from the time point t5 to the time point t6, the system control device 10 confirms the content of the task information acquired together with the registration request. If there is no problem, such as inconsistency, in the content of the task information, the system control device 10 stores the task information in the database. In other words, the system control device 10 registers and perpetuates the task information in the database. The system control device 10 stores the task information, serving as evidence indicating that the user has given a command for causing the robot 40 to execute work, together with a work execution log of the robot 40.

At the time point t6, the system control device 10 outputs a registration response including a report indicating that the registration of the task information is completed. The terminal device 20 acquires the registration response so as to confirm that the task information is registered.

At the time point t7 included in a time series not necessarily continuing from the period from the time point t1 to the time point t6, the system control device 10 reads the task information registered in the database and outputs a work command to the robot controller 30. In this example, the system control device 10 immediately outputs, to the robot controller 30 that controls the robot 40 serving as "X" designated in the pick-and-place task, the task information as the work command in accordance with the fact that the start condition is "immediately".

In a period from the time point t7 to the time point t8, the robot controller 30 analyzes the task information as the acquired work command. If there is no problem, such as inconsistency, in the content of the task information, the robot controller 30 proceeds to a procedure for commanding the robot 40 to execute work based on the content of the task information.

At the time point t8, if there is no problem, such as inconsistency, in the content of the task information, the robot controller 30 outputs, to the system control device 10, feedback information for reporting that the task information serving as the work command has been received without any problems and that the work of the robot 40 is to be started.

In a period from the time point t8 to the time point t9, the robot controller 30 generates information for controlling the hardware of the robot 40 based on the content of the task information and the content of the job information included in the task information, and outputs the information to the robot 40. In this example, the robot controller 30 generates information for controlling the hardware of the robot 40 based on the content of the pick-and-place task, and outputs the information to the robot 40. The robot 40 causes each component of the hardware to move by controlling the hardware based on the information acquired from the robot controller 30, thereby executing the work identified from the pick-and-place task.

First, the robot controller 30 sets a work procedure to be executed by the robot 40 based on the end condition identified from the pick-and-place task. Then, the robot controller 30 executes a job based on the set work procedure. In this example, a pick-and-place job is designated as the job. The end condition is designated as "five times". Therefore, the robot controller 30 causes the robot 40 to execute work involving repeating the pick-and-place job five times.

Subsequently, the robot controller 30 reads the action library for performing the pick-and-place operation as an execution module based on the identifier for the action library designated in the job information for identifying the pick-and-place job. The robot controller 30 reads an auxiliary library used for recognizing "screw" as the target work object in the pick-and-place operation and an auxiliary library used for recognizing the containers that are to pick and place the "screw" in the pick-and-place operation. The robot controller 30 reads information for designating a red container as the picking container and information for designating a blue container as the placing container. The robot controller 30 transfers the identifiers for designating the auxiliary libraries and the information for designating the features of the containers as execution arguments and invokes the action library. The robot controller 30 executes the invoked action library so as to be capable of causing the robot 40 to detect and pick the screw from the red container and to place the picked screw in the blue container.

At the time point t9, the robot controller 30 outputs, to the system control device 10, feedback information for reporting a result indicating that the work based on the task information has been executed by the robot 40. The feedback information may include information indicating whether the robot 40 has started executing the work or whether the robot 40 has ended the work. The feedback information may include information indicating whether the work has been properly completed by the robot 40 or has been interrupted midway due to an abnormality. The timing at which the robot controller 30 outputs the feedback information is not necessarily limited to the time point t8 or the time point t9. When the system control device 10 acquires the feedback information, the system control device 10 registers and perpetuates the feedback information in the database. Of the task information registered in the database, the system control device 10 updates task information corresponding to the feedback information based on the feedback information. If the feedback information includes information about an abnormality of the robot 40, the system control device 10 may output the information about the abnormality to the terminal device 20 to provide an error notification to the user.

At the time point t11 included in a time series not necessarily continuing from the period from the time point t1 to the time point t10, the terminal device 20 receives, from the user, an input of a request for referring to the execution status of the pick-and-place task given to the robot 40. The terminal device 20 outputs the reference request to the system control device 10. The system control device 10 updates the task information registered in the database based on the feedback information. Therefore, in a period from the time point 111 to the time point t12, the system control device 10 can read the task information registered in the database and acquire information related to the execution status of the pick-and-place task.

At the time point t12, the system control device 10 outputs, to the terminal device 20, the information related to the execution status of the pick-and-place task as a reference response to the reference request for the task. In a period from the time point 112 to the time point t13, the terminal device 20 acquires the information related to the execution status of the pick-and-place task and allows the user to refer to the information.

### [Procedure Example of Terminal Control Method]

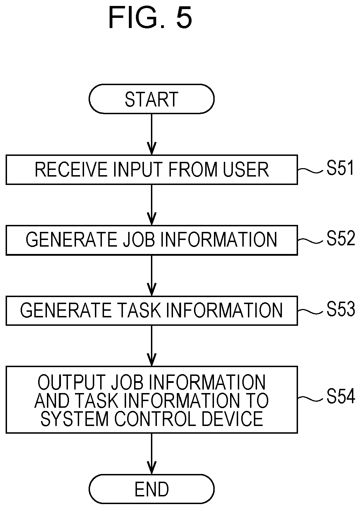

The terminal control unit 21 of the terminal device 20 may execute a terminal control method including a procedure of a flowchart illustrated in FIG. 5. The terminal control method may be implemented as a terminal control program executed by the processor included in the terminal control unit 21. The terminal control program may be stored in a non-transitory computer readable medium.

The terminal control unit 21 receives an input from the user via the user interface 23 (step S51).

The terminal control unit 21 generates job information based on the input from the user (step S52).

The terminal control unit 21 generates task information based on the input from the user (step S53).

The terminal control unit 21 outputs the job information and the task information to the system control device 10 (step S54). In other words, the terminal control unit 21 outputs the task information including the job information to the system control device 10. After executing step S54, the terminal control unit 21 ends the procedure of the flowchart in FIG. 5. The terminal control unit 21 may repeat the procedure of the flowchart in FIG. 5. The terminal control unit 21 may execute step S52 and step S53 interchangeably. The terminal control unit 21 may execute only one of step S52 and step S53.

For example, if the job information to be generated in accordance with the input from the user already exists, the terminal control unit 21 may search for the job information based on the input information of the user and acquire the job information from the database instead of generating the job information.

As an alternative to the above example in which the job information and the task information are generated by the terminal control unit 21 in step S52 and step S53, the job information and the task information may be generated by the control unit 11. In this case, if the job information to be generated already exists, the job information may be searched based on the input information of the user and be acquired from the database instead of the job information being generated. The job information or the task information may partially be generated by the terminal control unit 21. The remaining part may be generated by the control unit 11.

### [Procedure Example of Robot Control Method]

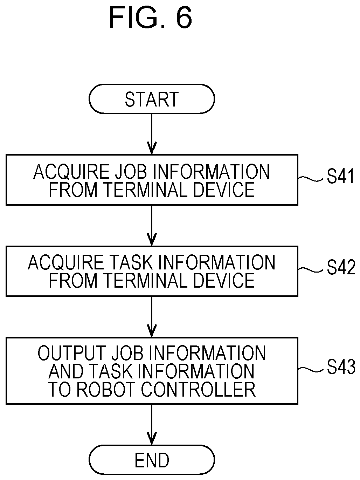

The control unit 11 of the system control device 10 may execute a robot control method including a procedure of a flowchart illustrated in FIG. 6. The robot control method may be implemented as a robot control program executed by the processor included in the control unit 11. The robot control program may be stored in a non-transitory computer readable medium.

The control unit 11 acquires job information from the terminal device 20 (step S41). Furthermore, the control unit 11 may register the acquired job information in the database.

The control unit 11 acquires task information from the terminal device 20 (step S42). Furthermore, the control unit 11 may register the acquired task information in the database.

The control unit 11 outputs the job information and the task information to the robot controller 30 (step S43). In other words, the control unit 11 outputs the task information including the job information to the robot controller 30. After executing step S43, the control unit 11 ends the procedure of the flowchart in FIG. 6. The control unit 11 may repeat the procedure of the flowchart in FIG. 6. The control unit 11 may execute step S41 and step S42 interchangeably. The control unit 11 may execute only one of step S41 and S42. For example, the control unit 11 may acquire the task information alone without acquiring the already-acquired job information again.

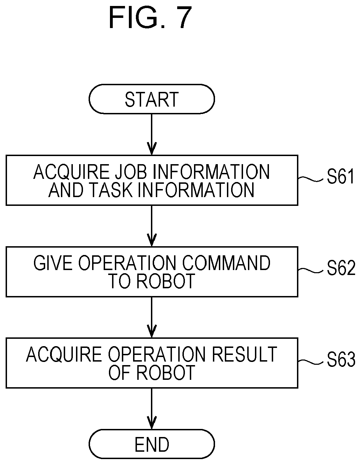

The robot controller 30 may execute a robot control method including a procedure of a flowchart illustrated in FIG. 7. The robot control method may be implemented as a robot control program executed by the processor included in the robot controller 30. The robot control program may be stored in a non-transitory computer readable medium.

The robot controller 30 acquires job information and task information from the system control device 10 (step S61). In other words, the robot controller 30 acquires the task information including the job information from the system control device 10. The robot controller 30 may acquire only one of the job information and the task information. For example, the robot controller 30 may acquire the task information alone without acquiring the already-acquired job information again.

The robot controller 30 outputs information about an operation command to the robot 40 (step S62).

The robot controller 30 acquires, from the robot 40, a result of an operation in response to the command (step S63). After executing step S63, the robot controller 30 ends the procedure of the flowchart in FIG. 7. The robot controller 30 may repeat the procedure of the flowchart in FIG. 7.

Although the above description relates to an example where the control unit 11 outputs the job information and the task information to the robot controller 30, the control unit 11 does not have to output either of or all of the job information and the task information to the robot controller 30. In this case, for example, the control unit 11 may output an identifier for identifying the task information to the robot controller 30, and may further output the task information and the job information or a library identified from the task information and the job information in response to a request from the robot controller 30.

As mentioned above, the robot control system 1 according to this embodiment realizes an abstract work command with respect to the robot 40 with enhanced autonomy. The user can configure definition information data, indicating the work content to be executed by the robot 40, as job information by performing a setting process mainly from the GUI, so as to give a command about the work content to the robot 40.

As a comparative example, it is assumed that a system operates in accordance with a program created by a teaching system and installed in a robot controller. In the system according to the comparative example, it is necessary to define the coordinates of each component of a robot or specific input-output information of the robot for moving the robot. This results in increased time and cost spent in the work for generating information for giving a command about the work content to the robot. Moreover, the robot taught in this manner can only move identically to the taught movement. For example, when an environment (such as a container) different from the normal environment is prepared even though the robot is to execute the same work, it is difficult for the robot to execute the work. Therefore, in the system according to the comparative example, the application range of the robot is limited.

In the system according to the comparative example, the teaching process is to be executed by a technician with a specialized skill. In other words, the teaching process is not simple, and it is difficult to perform the teaching process on an as-needed basis. This is one of the reasons that impede wider application of robots.

In contrast, the robot control system 1 according to this embodiment achieves both enhanced autonomy of the robot 40 itself and an abstract work command according to the enhanced autonomy. In other words, with the undefined portion being maintained in the action library and the undefined portion being compensated for based on information input by the user when the robot 40 is to be used, for example, the robot 40 can execute taught work even when the environment is not completely identical to the environment where the teaching process is performed. Since the work can be executed even in an environment different from the environment where the robot 40 is taught, a fine setting process does not need to be performed in order for the user to cause the robot 40 to execute the work, so that the work command can be made abstract, thereby reducing the load of the teaching process. As a result, an increased work range of the robot 40 and a wider application range of the robot 40 may be achieved.

In the system according to the comparative example, the work defined in accordance with the teaching process is often a program managed inside the robot (i.e., by a robot controller). In order to give a work command to the robot controller via a network, the program managed inside the robot may require a unique data format or protocol or may require a dedicated program for relaying the program. A unique or dedicated configuration makes it difficult to achieve a cooperative operation with an information processing system operating in a production site, such as a factory. In other words, the system that uses the program managed inside the robot has low compatibility with the information processing system operating in the production site, such as a factory. As a result, the application range of the robot is limited.

In contrast, the robot control system 1 according to this embodiment can define work and give a work command with abstract fineness to the robot 40, similarly to a work command given between humans for indicating which robot 40 is to execute what, when, where, and how. Accordingly, the robot 40 can be made to execute non-routine work by simply reconfiguring work definition data (job information) or work command data (task information). As a result, the work content to be executed by the robot 40 can be reconfigured within a short period of time and at low cost.

In the robot control system 1 according to this embodiment, the autonomous function of the robot 40 is implemented by library software (the action library or the auxiliary library included in the library group 333) and a software group, such as a procedure for executing a library. The user can additionally install the library software in the robot controller 30 or delete the library software from the robot controller 30. By installing the library software, the robot 40 can learn new movement and/or learn a new determination standard.

In the robot control system 1 according to this embodiment, even if the user is a person-in-charge not having a specialized skill for developing a program or the like, the user can readily generate a work command for the robot 40.

Since the work definition data (job information) indicating the work content to be executed by the robot 40 is managed by the server device, the compatibility with another information processing system used in the production site, such as a factory, may be enhanced. With the enhanced compatibility with another information processing system, an interface having high compatibility with the information processing system may be used as an interface, such as a GUI, used by the user for inputting a command. As a result, a system that causes the robot 40 to execute work in a manufacturing life cycle can be incorporated as one service component into the production site, such as a factory.

### (Other Embodiments)

Other embodiments will be described below.

### [Robot Simulator 50]

Although not essential, the system control device 10 may further include the robot simulator 50. Instead of including the robot simulator 50, the system control device 10 may be connected communicatively to an externally-installed robot simulator 50.

The robot simulator 50 can simulate the movement of the robot 40, realized as hardware, by information processing. The control unit 11 of the system control device 10 may output task information to the robot simulator 50 to cause the robot simulator 50 to simulate the movement of the robot 40, and acquire a simulation result of the movement of the robot 40. In detail, the robot simulator 50 simulates the movement of the robot 40 by performing information processing based on task information and job information included in the task information. The robot simulator 50 outputs the simulation result of the movement of the robot 40 to the control unit 11.

The control unit 11 may analyze the simulation result to determine whether the movement of the robot 40 based on the task information is to be properly completed or to be interrupted midway due to an abnormality. The control unit 11 may be configured to output, to the robot controller 30, the task information based on which it is determined that the movement of the robot 40 is to be properly completed. The control unit 11 may be configured not to output, to the robot controller 30, the task information based on which it is determined that the movement of the robot 40 is not to be properly completed. The control unit 11 preliminarily acquires the simulation result based on the task information, so that an abnormality in the movement of the robot 40 can be reduced.

### [Generation of Task Information Based on Feedback Information]

The control unit 11 of the system control device 10 may acquire, from the robot controller 30 via the second interface 14, feedback information related to a result of work executed by the robot 40 based on task information. The control unit 11 may update the task information registered in the database 325 based on the acquired feedback information. The control unit 11 may generate new task information and register the task information in the database 325 based on the acquired feedback information. The control unit 11 may output the updated or generated task information to the robot controller 30. In other words, the control unit 11 may update or generate the task information based on the feedback information and output the task information to the robot controller 30. With the control unit 11 updating or generating the task information based on the feedback information, the movement of the robot 40 may be improved.

### [Generation of Task Information Using Stored Job Information]

In the above-described embodiment, the control unit 11 of the system control device 10 acquires job information and task information from the terminal device 20 and registers the job information and the task information in the database. The task information includes the job information and is used for identifying which robot 40 is to execute the work content of the robot 40 identified from the job information and when the work content is to be executed. The user may sometimes make a request for causing the robot 40 to re-execute work executed by the robot 40 in the past. In this case, the job information is not changed. Therefore, the control unit 11 can use the job information stored in the database 324 at the time of previous execution. Accordingly, the control unit 11 does not need to acquire the job information again for causing the robot 40 to execute the same work. As a result, the same work can be readily executed repeatedly at any timing. In other words, the control unit 11 perpetuates and stores the job information in addition to temporarily storing the job information. Alternatively, the control unit 11 at least stores the job information associated with the task information for identifying the start condition and the end condition, so that the control unit 11 can command the robot controller 30 to cause the robot 40 to execute the work repeatedly. Accordingly, the robot 40 can be caused to execute the same work again. The same work to be executed repeatedly at any timing is also referred to as repeated work.

### [Installation of Library]

The robot controller 30 has an action library or auxiliary library preinstalled therein, invokes the action library or auxiliary library from the library group 333 including the installed action library or auxiliary library, and causes the robot 40 to execute work. The robot controller 30 acquires data of the action library or auxiliary library from the system control device 10 and installs the data. The system control device 10 may output data of a new action library or auxiliary library to the robot controller 30 so that the robot controller 30 can install the new action library or auxiliary library. The system control device 10 outputs the data of the new action library or auxiliary library to the robot controller 30, so that the robot controller 30 can learn new movement to be executed by the robot 40 or various new functions, such as new object recognition, to be executed by the robot 40. This results in enhanced convenience of the robot control system 1.

The library group 33 does not have to be partially or entirely installed in the robot controller 30. In this case, for example, the system control device 10 may output a necessary action library alone to the robot controller 30 based on the job information and the task information. An auxiliary library alone may be installed in the robot controller 30.

### [Integration of Terminal Device 20 and System Control Device 10]

The terminal device 20 may have a function for registering job information and task information in the database. In this case, the robot control system 1 does not have to include the system control device 10.

The system control device 10 may have the function of the user interface 23 so as to directly receive an input from the user. In this case, the robot control system 1 does not have to include the terminal device 20.

Although the embodiment of the robot control system 1 has been described above, the embodiment of the present disclosure may be in the form of a storage medium (e.g., an optical disk, magneto-optical disk, CD-ROM, CD-R, CD-RW, magnetic tape, hard disk, memory card, or the like) having a program stored therein, in addition to the method or program for implementing the system or the device.

The implementation type of the program is not limited to an application program, such as an object code compiled by a compiler, a program code executed by an interpreter, or the like, and may be, for example, a program module incorporated in an operating system. The program does not necessarily need to be executed entirely in a CPU on a control substrate, and may be executed partially or entirely by a separate processing unit implemented in an extension board or extension unit added to the substrate, where necessary.

Although embodiments according to the present disclosure have been described based on the drawings and practical examples, various alternative embodiments and variations are possible for a skilled person based on the present disclosure. Therefore, it is to be noted that these alternative embodiments and variations are included in the scope of the present disclosure. For example, the functions and the like included in the respective components can be rearranged so as not to logically conflict with each other, and a plurality of components may be combined into one or may be divided.

All the configuration requirements described in the present disclosure and/or all the disclosed methods or all the steps may be combined based on a freely-chosen combination except for a combination where these features are exclusive with each other. Each feature described in the present disclosure may be replaced with an alternative feature for achieving the same purpose, an equivalent purpose, or a similar purpose, unless otherwise noted. Therefore, the disclosed features are merely a comprehensive series of identical or uniform features, unless otherwise noted.

The embodiments according to the present disclosure are not limited to any of the specific configurations in the embodiments described above. The embodiments according to the present disclosure can be extended to all the novel features described in the present disclosure or a combination thereof, or to all the novel methods described in the present disclosure, the steps, or a combination thereof.

The terms "first", "second", and the like in the present disclosure are identifiers for differentiating the relevant components from each other. With regard to the components differentiated from each other using the terms "first", "second", and the like in the present disclosure, the numbers of the components are interchangeable. For example, with regard to the first interface 13 and the second interface 14, the identifiers "first" and "second" are interchangeable. The identifiers are interchanged with each other at the same time. The components are differentiated from each other even after the identifiers are interchanged. The identifiers may be deleted. Components having the identifiers deleted therefrom are differentiated from each other using reference signs. The identifiers alone, such as "first" and "second", in the present disclosure are not to be used for interpreting the sequence of the components or as grounds for existence of an identifier having a smaller number.

### REFERENCE SIGNS

1 robot control system
10 system control device (11: control unit, 12: storage unit, 13: first interface, 14: second interface)
20 terminal device (21: terminal control unit, 22: communication interface, 23: user interface)
30 robot controller
40 robot
50 robot simulator
80 network
82 access point
322 work-content management procedure
323 work-command management procedure
326 work-command output procedure
328 feedback management procedure
324, 325, 329 database
331 work-command acquisition procedure
332 work execution procedure
333 library group

## Claims

1. A system control device comprising:
a first interface connected communicatively to at least one terminal device configured to receive input information input by a user;
a second interface connected communicatively to at least one robot controller based on at least one library indicating robot movement and comprising an undefined portion, the at least one robot controller being configured to control at least one robot; and
a control unit,
wherein the control unit is configured to acquire job information generated based on the input information, the job information being configured to identify the library in accordance with work to be executed by the at least one robot and being capable of compensating for the undefined portion, and
wherein the control unit is configured to output a command for the work to the at least one robot controller based on the job information.

2. The system control device according to claim 1,
wherein the control unit is configured to acquire task information generated based on the input information, the task information comprising information configured to identify the robot that is to execute the work from the at least one robot, and
wherein the control unit is configured to output the command for the work to the robot controller controlling the robot based on the job information and the task information.

3. The system control device according to claim 2,
wherein the task information comprises information configured to identify a start condition and an end condition based on which the robot is to execute a work content identified from the job information.

4. The system control device according to claim 3,
wherein the control unit is configured to at least store the job information associated with the task information configured to identify the start condition and the end condition, such that the control unit is capable of commanding the robot controller to cause the robot to execute the work repeatedly.

5. The system control device according to any one of claims 1 to 4,
wherein the control unit is configured to output data of a new library to the robot controller such that the robot controller is capable of installing the new library.

6. The system control device according to any one of claims 1 to 5,
wherein the job information further comprises information related to subsequent work occurring based on a result of work previously executed by the robot.

7. The system control device according to any one of claims 1 to 6,
wherein the job information comprises compensation information configured to compensate for the undefined portion, and
wherein the compensation information comprises information related to a target object for the work.

8. The system control device according to any one of claims 1 to 7,
wherein the job information comprises compensation information configured to compensate for the undefined portion, and
wherein the compensation information comprises information related to a work environment where the work is executed.

9. The system control device according to any one of claims 1 to 8,
wherein the job information comprises compensation information configured to compensate for the undefined portion, and
wherein the control unit acquires information in the compensation information, the information being configured to designate an auxiliary library indicating auxiliary movement of the robot.

10. The system control device according to any one of claims 2 to 4,
wherein the control unit is configured to output an identifier to the robot controller, the identifier being configured to identify the task information, and
wherein the control unit is configured to further output the task information and the job information or a library in response to a request from the robot controller, the library being identified from the task information and the job information.

11. The system control device according to any one of claims 2, 3, 4, and 10, further comprising:
a robot simulator comprising software equivalent to software comprising the library,
wherein the control unit is configured to output the task information to the robot simulator, acquire a simulation result of the movement of the robot based on the task information from the robot simulator, and determine whether to output the task information to the robot controller based on the simulation result.

12. The system control device according to any one of claims 2, 3, 4, 10, and 11,
wherein the second interface is configured to acquire, from the robot controller, feedback information related to a result of the work executed by the robot based on the task information, and
wherein the control unit is configured to update or generate the task information based on the feedback information and output the task information to the robot controller.

13. A robot control method comprising:
communicating with at least one terminal device and at least one robot controller, the at least one terminal device being configured to receive input information input by a user, the at least one robot controller being configured to control at least one robot based on at least one library indicating robot movement and comprising an undefined portion;
acquiring, from the terminal device, job information generated based on the input information, the job information being configured to identify the library in accordance with work to be executed by the at least one robot and being capable of compensating for the undefined portion; and
outputting a command for the work to the at least one robot controller based on the job information.

14. A terminal device comprising:
a user interface configured to receive input information input by a user;
a communication interface connected communicatively to a system control device configured to output information to at least one robot controller, the at least one robot controller being configured to control at least one robot based on at least one library indicating robot movement and comprising an undefined portion; and
a terminal control unit,
wherein the terminal control unit is configured to generate job information generated based on the input information, the job information being configured to identify the library in accordance with work to be executed by the at least one robot and being capable of compensating for the undefined portion, and
wherein the communication interface is configured to output the job information to the system control device.

15. A terminal control method comprising:
receiving input information input by a user; and
generating job information based on the input information and outputting the job information, the job information being configured to identify at least one library in accordance with work to be executed by at least one robot and being capable of compensating for an undefined portion, the at least one robot being controlled by at least one robot controller based on the library indicating robot movement and comprising the undefined portion.

16. A robot control system comprising:
at least one robot controller configured to control at least one robot based on at least one library indicating robot movement and comprising an undefined portion;
a terminal device comprising a user interface configured to receive input information input by a user; and
a system control device connected communicatively to each of the robot controller and the terminal device,
wherein the terminal device is configured to generate job information based on the input information and output the job information to the system control device, the job information being configured to identify the library in accordance with work to be executed by the at least one robot and being capable of compensating for the undefined portion,
wherein the system control device is configured to output a command for the work to the at least one robot controller based on the job information acquired from the terminal device, and
wherein the robot controller is configured to cause the robot to execute the work based on the command for the work.
